# NEUE EUROPÄISCHE PATENTSCHRIFT

(11) **EP 4 045 367 B2**
(45) Veröffentlichungstag und Bekanntmachung des Hinweises auf die Entscheidung über den Einspruch: **23.09.2026**
(45) Hinweis auf die Patenterteilung: 21.06.2023
(21) Anmeldenummer: 20790221.4
(22) Anmeldetag: 06.10.2020
(51) Int. Cl.: B60T 8/17, B60T 13/26, B60T 13/68

(54) **VORRICHTUNG UND VERFAHREN ZUM STEUERN EINER BREMSANLAGE EINES ANHÄNGERS EINES FAHRZEUGGESPANNS VON EINEM ZUGFAHRZEUG DES FAHRZEUGGESPANNS AUS, STEUERSYSTEM ZUM STEUERN EINER BREMSANLAGE EINES FAHRZEUGGESPANNS UND ZUGFAHRZEUG FÜR EINEN ANHÄNGER**
APPARATUS AND METHOD FOR CONTROLLING A BRAKE SYSTEM OF A TRAILER OF A VEHICLE COMBINATION FROM A TRACTION VEHICLE OF THE VEHICLE COMBINATION, CONTROL SYSTEM FOR CONTROLLING A BRAKE SYSTEM OF A VEHICLE COMBINATION, AND TRACTION VEHICLE FOR A TRAILER
APPAREIL ET PROCÉDÉ DE COMMANDE D'UN SYSTÈME DE FREINAGE D'UNE REMORQUE D'UNE COMBINAISON DE VÉHICULES À PARTIR D'UN VÉHICULE TRACTEUR DE LA COMBINAISON DE VÉHICULES, SYSTÈME DE COMMANDE POUR COMMANDER UN SYSTÈME DE FREINAGE D'UNE COMBINAISON DE VÉHICULES, ET VÉHICULE TRACTEUR POUR UNE REMORQUE

(30) Priorität: 15.10.2019 DE 102019127727
(43) Veröffentlichungstag der Anmeldung: 24.08.2022
(73) Patentinhaber: KNORR-BREMSE Systeme für Nutzfahrzeuge GmbH, 80809 München (DE)
(72) Erfinder: BELLING, Michael, 71272 Renningen (DE); KAUFMANN, Christian, 71063 Sindelfingen (DE)
(74) Vertreter: Aurigium Leischner & Luthe
(86) Internationale Anmeldenummer: PCT/EP2020/077913
(87) Internationale Veröffentlichungsnummer: WO 2021/073931

(56) Entgegenhaltungen:
- WO-A1-03/004333
- DE-B3- 102008 009 043

## Beschreibung

### Beschreibung

Die vorliegende Erfindung bezieht sich auf eine Vorrichtung zum Steuern einer Bremsanlage eines Anhängers eines Fahrzeuggespanns von einem Zugfahrzeug des Fahrzeuggespanns aus, auf ein Steuersystem zum Steuern einer Bremsanlage eines Fahrzeuggespanns, auf ein Zugfahrzeug für einen Anhänger und auf ein Verfahren zum Steuern einer Bremsanlage eines Anhängers eines Fahrzeuggespanns von einem Zugfahrzeug des Fahrzeuggespanns aus.

Ein Anhängersteuergerät (Trailer Control Modul [TCM]) in einem elektronischen Bremssystem (EBS) eines Fahrzeuggespanns kann als ein einfaches Steuergerät ausgeführt sein, welches im Wesentlichen insbesondere aus mehreren Ventilen sowie einer Leiterplatte zur Anbindung des Ventilblockes und einem Drucksensor bestehen kann. Eine Ansteuerung der Ventile sowie eine Sensorverarbeitung kann hierbei üblicherweise ein zentrales EBS-Steuergerät übernehmen.

Die DE 10 2008 009 043 B3 offenbart ein elektronisch geregeltes Bremssystem eines für den Anhängerbetrieb vorgesehenen Zugfahrzeugs, welches mindestens einen ersten elektrischen Bremssteuerkreis und einen zweiten elektrischen Bremssteuerkreis umfasst, wobei zum Beispiel ein Anhängersteuermodul oder ein Parkbremsmodul für eine Druckmittelsteuerung von Bremsaktuatoren eingesetzt werden, welche von einem gestörten elektrischen Bremskreis nicht mehr angesteuert werden können. Ferner betrifft die DE 103 10 235 A1 eine elektrisch-/pneumatische Steuereinrichtung für ein an ein Fahrzeugteil koppelbares Anhängefahrzeug. Die DE 10 2017 005 980 A1 betrifft ein elektropneumatisches Anhängersteuermodul für ein elektronisch steuerbares pneumatisches Bremssystem für einen Fahrzeugzug mit einem Zugwagen und einem Anhängerwagen, mit einem elektronischen Steuergerät, einem pneumatischen Vorratseingang, der mit einem Druckluftvorrat verbindbar ist, einer Anhängersteuer-Ventileinheit mit einem oder mehreren elektropneumatischen Ventilen, einem Anhängerbremsdruckanschluss und einem Anhängerversorgungsdruckanschluss.

Vor diesem Hintergrund ist es die Aufgabe der vorliegenden Erfindung, eine verbesserte Vorrichtung zum Steuern einer Bremsanlage eines Anhängers eines Fahrzeuggespanns von einem Zugfahrzeug des Fahrzeuggespanns aus, ein verbessertes Steuersystem zum Steuern einer Bremsanlage eines Fahrzeuggespanns, ein verbessertes Zugfahrzeug für einen Anhänger und ein verbessertes Verfahren zum Steuern einer Bremsanlage eines Anhängers eines Fahrzeuggespanns von einem Zugfahrzeug des Fahrzeuggespanns aus zu schaffen.

Diese Aufgabe wird durch eine Vorrichtung zum Steuern einer Bremsanlage eines Anhängers eines Fahrzeuggespanns von einem Zugfahrzeug des Fahrzeuggespanns aus, durch ein Steuersystem zum Steuern einer Bremsanlage eines Fahrzeuggespanns, durch ein Zugfahrzeug für einen Anhänger, durch ein Verfahren zum Steuern einer Bremsanlage eines Anhängers eines Fahrzeuggespanns von einem Zugfahrzeug des Fahrzeuggespanns aus und durch ein entsprechendes Computerprogramm gemäß den Hauptansprüchen gelöst.

Erfindungsgemäß ist eine Druckregelschleife vollständig innerhalb des Anhängersteuermoduls realisiert. So wird eine auf EBS-Zentralsteuergerät und Anhängersteuermodul verteilte Regelschleife vermieden, indem die Sensorsignalverarbeitung und Druckregelung innerhalb des Anhängersteuermoduls erfolgen.

Vorteilhafterweise kann gemäß Ausführungsformen insbesondere eine Regelgüte einer Druckregelung erhöht werden, da die vollständig in dem Anhängersteuermodul angeordnete Regelschleife schnell und fehlerresistent ausgeführt sein kann. An der Regelung ist der zumindest eine Drucksensor des Anhängersteuermoduls als Regelgröße beteiligt. Ein Sensorsignal von dem zumindest einen Drucksensor wird somit nicht in einem zentralen Steuergerät des Bremssystems, sondern in dem Anhängersteuermodul eingelesen und verarbeitet. So kann eine zeitliche Differenz bei einer Signalübertragung minimiert werden, sodass die Regelgüte verbessert werden kann. Bei einer Übertragung des Sensorsignals des zumindest einen Drucksensors über lediglich geräteinterne Leitungen können Beeinträchtigungen des Signals durch externe Störquellen (EMV) minimiert werden. Auch Masseversätze können zugunsten einer verbesserten Regelgüte vermieden oder minimiert werden. Des Weiteren kann das Anhängersteuermodul insbesondere vorteilhafterweise ausgebildet sein, um zusätzliche Funktionen bzw. solche Funktionen aufzunehmen, welche das zentrale Steuergerät des elektronischen Bremssystems entlasten. Mit diesem Konzept kann beispielsweise auch eine Anzahl von Leitungen zwischen dem zentralen Steuergerät und dem Anhängersteuermodul gesenkt werden. Insbesondere da Funktionen von dem zentralen Steuergerät in das Anhängersteuermodul verlagert werden können, kann auch eine Anzahl von Anschlusspins reduziert werden. So können auch in dem zentralen Steuergerät Kosten eingespart werden. Durch die Integration bzw. Verlagerung von Funktionen in das Anhängersteuermodul können die Kosten dort anfallen, wo die Funktionen auch benötigt werden. Für das zentrale Steuergerät ergibt sich auch eine verringerte Anzahl unterschiedlicher Bestückungsvarianten, was Komplexität und Kosten senken kann.

Eine Vorrichtung zum Steuern einer Bremsanlage eines Anhängers eines Fahrzeuggespanns von einem Zugfahrzeug des Fahrzeuggespanns aus weist die Merkmale gemäß Anspruch 1 auf.

Bei dem Zugfahrzeug kann es sich um ein Nutzfahrzeug handeln, beispielsweise einen Lastkraftwagen oder dergleichen. Somit kann das Fahrzeuggespann das Zugfahrzeug und den Anhänger aufweisen. Die Vorrichtung kann auch als ein Anhängersteuermodul oder aufgrund von Sensorverarbeitung sowie Aktuatoransteuerung als ein Anhängerregelmodul bezeichnet werden. Insbesondere kann die Vorrichtung im Bereich einer Hinterachse des Zugfahrzeugs als Verbindungselement zum Anhänger positioniert sein. Die Vorrichtung kann die Ventile und eine Leiterplatte aufweisen, an der mindestens die Steuereinrichtung der Vorrichtung angeordnet ist. Das Einlassventil, das Auslassventil und das Sicherungsventilkönnen als Magnetventile ausgeführt sein. Das Sicherungsventil kann stromlos offen sein und bei elektrischer Ansteuerung geschlossen werden, um unabhängig vom Bremspedaldruck einen gewünschten Druck einzusteuern. Es kann dazu verwendet werden, bei einem elektrischen Systemausfall auf die Rückfallebene rein pneumatisch zu fallen. Die Steuereinrichtung kann als ein Mikrocontroller ausgeführt sein. Die Kommunikationsschnittstelle kann ausgebildet sein, um einen Anschluss zumindest eines Kommunikationskabels an der Vorrichtung zu ermöglichen. Die Kommunikationsschnittstelle kann ausgebildet sein, um zumindest eine CAN-Bus-Verbindung (CAN = Controller Area Network; ein serielles Bussystem) zwischen der Vorrichtung und zumindest der Zentralsteuereinheit zu ermöglichen. Die Vorrichtung kann ferner einen Spannungsregler sowie eine Mehrzahl von Schalteinrichtungen aufweisen.

Gemäß einer Ausführungsform kann die Vorrichtung eine Versorgungsschnittstelle zum Empfangen einer elektrischen Versorgungsspannung von der Zentralsteuereinheit aufweisen, insbesondere wobei die Versorgungsschnittstelle zwei elektrische Anschlüsse für jeweils eine elektrische Leitung aufweisen kann. Ein erster elektrischer Anschluss kann ein elektrischer Versorgungsanschluss zum Anschluss einer Versorgungsleitung für ein elektrisches Versorgungspotenzial sein und ein zweiter elektrischer Anschluss kann ein elektrischer Masseanschluss zum Anschluss einer Masseleitung für ein elektrisches Massepotenzial sein. Die Versorgungsschnittstelle kann als eine externe Schnittstelle bzw. Schnittstelle zur externen Versorgung ausgeführt sein. Die Versorgungsschnittstelle kann elektrisch mit der Mehrzahl von Ventilen, mit dem zumindest einen Drucksensor mit der Steuereinrichtung verbunden sein. Zusätzlich oder alternativ kann die Kommunikationsschnittstelle zwei Anschlüsse für jeweils ein Kommunikationskabel aufweisen. An einem ersten Anschluss kann ein erstes Kommunikationskabel, insbesondere ein CAN-Bus-Kabel für einen Highside-Pfad der Vorrichtung anschließbar sein und an einem zweiten Anschluss kann ein zweites Kommunikationskabel, insbesondere ein CAN-Bus-Kabel für einen Lowside-Pfad der Vorrichtung anschließbar sein. Eine solche Ausführungsform bietet den Vorteil, dass eine minimale Anzahl an Anschlüssen und Leitungen bzw. Kabeln benötigt wird. Insbesondere sind lediglich zwei stromführende Leitungen sowie Leitungen beziehen zweite Kabel eines Bussystems, wie z. B. CAN, ausreichend, was wiederum Kosten einspart. Außerdem kann somit ein herstellerseitiger Aufwand bezüglich Fahrzeugverkabelung verringert werden.

Erfindungsgemäß ist die Kommunikationsschnittstelle mit einem Highside-Pfad und mit einem Lowside-Pfad der Vorrichtung verbunden. So kann vorteilhaft eine einfache und zuverlässige Steuerung der Vorrichtung durch die Zentralsteuereinheit ermöglicht werden.

Auch weist die Vorrichtung erfindungsgemäß eine Kommunikationseinheit zum Kommunizieren mit dem Anhänger mittels Trägerfrequenztechnik auf. Zusätzlich kann die Vorrichtung eine weitere Kommunikationsschnittstelle zum Übertragen von Signalen zwischen der Vorrichtung und dem Anhänger aufweisen. Die weitere Kommunikationsschnittstelle kann mittels CAN, ETH, FlexRay, Funk oder dergleichen realisiert sein. So können vorteilhaft weitere Funktionalitäten durch die Vorrichtung ausgeführt bzw. von der Zentralsteuereinheit verlagert oder ausgelagert werden, welche in dem Anhänger bzw. für den Anhänger benötigt werden. Auch können auf diese Weise spezielle Ländervarianten realisiert werden.

Gemäß einer Ausführungsform kann die Vorrichtung als ein elektronisches pneumatisches Modul ausgeführt sein. Eine solche Ausführungsform als elektronisches pneumatisches Modul bzw. elektro-pneumatisches Modul bietet den Vorteil, dass die Vorrichtung kompakt und einfach zu montieren ausgeführt sein kann, wobei Bauraum eingespart werden kann.

Dabei kann die Vorrichtung, genauer gesagt die als elektronisches pneumatisches Modul ausgeführte Vorrichtung, einen pneumatischen Vorratseinlass für Arbeitsmedium mit einem Vorratsdruck, einen pneumatischen Feststellbremskreiseinlass zur Verbindung mit einem Feststellbremskreis des Zugfahrzeugs, einen pneumatischen Betriebsbremskreiseinlass zur Verbindung mit einem Betriebsbremskreis des Zugfahrzeugs, einen pneumatischen Vorratsauslass für Arbeitsmedium mit dem Vorratsdruck zu dem Anhänger und zusätzlich oder alternativ einen pneumatischen Bremsauslass für Arbeitsmedium mit dem Steuerdruck zu dem Anhänger aufweisen. Der Vorratsdruck kann größer als der Steuerdruck sein. Auf diese Weise kann eine einfache Integration pneumatischer und elektronischer Funktionen in einem Modul ermöglicht werden.

Ein Steuersystem zum Steuern einer Bremsanlage eines Fahrzeuggespanns, wobei das Fahrzeuggespann ein Zugfahrzeug und einen Anhänger aufweist, weist folgende Merkmale auf:
eine Ausführungsform der vorstehend genannten Vorrichtung; und
die Zentralsteuereinheit, wobei die Vorrichtung elektrisch über die Versorgungschnittstelle und signalübertragungsfähig über die Kommunikationsschnittstelle mit der Zentralsteuereinheit verbunden ist.

Die Vorrichtung und die Zentralsteuereinheit können vorteilhaft zusammenwirken, um die Bremsanlage zu steuern. Die Bremsanlage des Fahrzeuggespanns kann eine Bremsanlage des Zugfahrzeugs und die Bremsanlage des Anhängers aufweisen. Insbesondere kann die Vorrichtung unter Verwendung von zwei elektrischen Leitungen über die Versorgungschnittstelle und unter Verwendung von zwei Kommunikationskabeln über die Kommunikationsschnittstelle mit der Zentralsteuereinheit verbunden sein. Die Zentralsteuereinheit kann eine eigene elektrische Energieversorgung, elektrische Anschlüsse für die elektrischen Leitungen, einen Mikrocontroller und zusätzlich oder alternativ eine Kommunikationseinheit mit Kommunikationsanschlüssen für die Kommunikationskabel aufweisen.

Gemäß einer Ausführungsform kann die Zentralsteuereinheit einen Eingangsanschluss zum Empfangen einer Bremsanforderung von einem Fußbremsmodul des Zugfahrzeugs aufweisen. Zusätzlich oder alternativ kann die Zentralsteuereinheit ausgebildet sein, um das Steuersignal zur Übertragung an die Vorrichtung abhängig von der Bremsanforderung zu erzeugen. Dabei können die Zentralsteuereinheit und das Fußbremsmodul über einen CAN-Bus miteinander verbunden sein. Eine solche Ausführungsform bietet den Vorteil, dass ein Steuerungsaufwand seitens der Zentralsteuereinheit verringert werden kann, da insbesondere die Druckregelung durch die Vorrichtung ausgeführt wird.

Ein Zugfahrzeug für einen Anhänger, wobei das Zugfahrzeug und der Anhänger ein Fahrzeuggespann bilden, weist folgende Merkmale auf:
eine Ausführungsform des vorstehend genannten Steuersystems;
ein Fußbremsmodul zum Generieren einer Bremsanforderung ansprechend auf eine Betätigung durch einen Nutzer, wobei das Fußbremsmodul mit der Zentralsteuereinheit des Steuersystems verbunden ist;
eine Bremsanlage des Zugfahrzeugs, wobei die Bremsanlage mit dem Fußbremsmodul und dem Steuersystem verbunden ist; und
eine Anhängerschnittstelle zum Übertragen des Arbeitsmediums mit dem Steuerdruck an den Anhänger, wobei die Anhängerschnittstelle mit der Vorrichtung des Steuersystems verbunden ist.

Die Anhängerschnittstelle kann auch ausgebildet sein, um Arbeitsmedium mit Vorratsdruck an den Anhänger zu übertragen. Dabei kann die Anhängerschnittstelle eine erste pneumatische Kopplungseinrichtung zum Übertragen des Arbeitsmediums mit dem Steuerdruck und eine zweite pneumatische Kopplungseinrichtung zum Übertragen des Arbeitsmediums mit dem Vorratsdruck aufweisen.

Es wird auch ein Verfahren zum Steuern einer Bremsanlage eines Anhängers eines Fahrzeuggespanns von einem Zugfahrzeug des Fahrzeuggespanns aus vorgestellt, wobei das Verfahren unter Verwendung einer Ausführungsform der vorstehend genannten Vorrichtung ausführbar ist, wobei das Verfahren folgende Schritte aufweist:
Einlesen des Steuersignals von der Zentralsteuereinheit über die Kommunikationsschnittstelle;
Auswerten des Sensorsignals des zumindest einen Drucksensor des; und
Ansteuern der Ventile abhängig von dem ausgewerteten Sensorsignal und abhängig von dem Steuersignal, um den Steuerdruck des Arbeitsmediums für die Bremsanlage des Anhängers einzustellen.

Das Verfahren kann bzw. die Schritte des Verfahrens können unter Verwendung einer Vorrichtung bzw. eines Steuergeräts ausgeführt werden, genauer gesagt unter Verwendung einer Ausführungsform der vorstehend genannten Vorrichtung. Insbesondere kann das Verfahren bzw. können die Schritte des Verfahrens mittels der Steuereinrichtung der Vorrichtung ausgeführt werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Steuersystems zum Steuern einer Bremsanlage eines Fahrzeuggespanns;
Fig. 2 eine schematische Darstellung eines Steuersystems zum Steuern einer Bremsanlage eines Fahrzeuggespanns gemäß einem Ausführungsbeispiel;
Fig. 3 eine schematische Darstellung eines Fahrzeuggespanns mit einem Steuersystem gemäß einem Ausführungsbeispiel; und
Fig. 4 ein Ablaufdiagramm eines Verfahrens zum Steuern gemäß einem Ausführungsbeispiel.

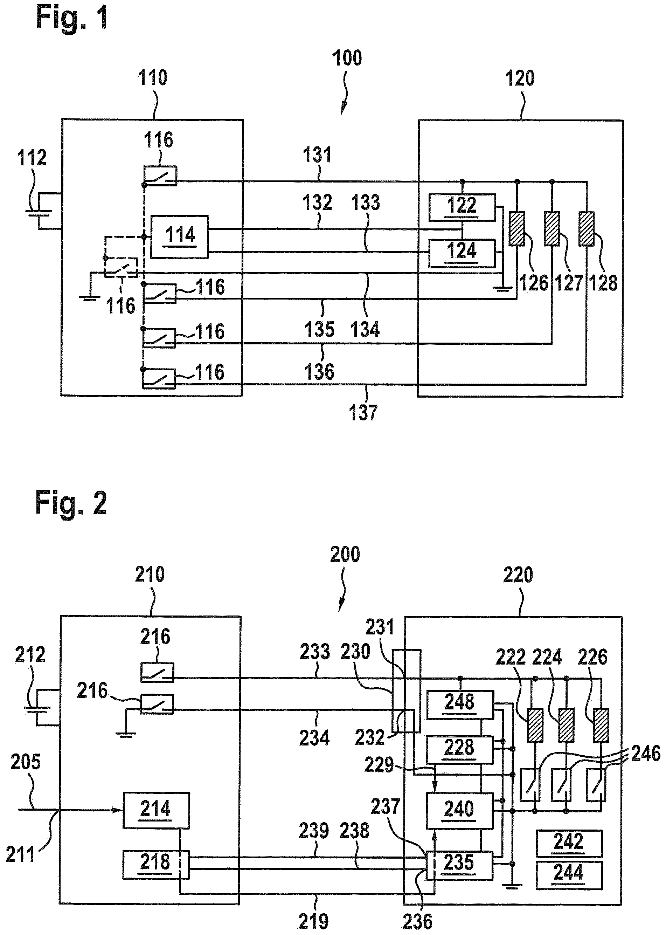

Fig. 1 zeigt eine schematische Darstellung eines Steuersystems 100 zum Steuern einer Bremsanlage eines Fahrzeuggespanns. Das Fahrzeuggespann umfasst ein Zugfahrzeug und einen Anhänger. Das Steuersystem 100 ist Teil eines elektronischen Bremssystems (EBS) des Fahrzeuggespanns. Das Steuersystem 100 weist ein Steuergerät 110 bzw. eine elektronische Steuereinheit (ECU, Electronic Control Unit) auf. Das Steuergerät 110 weist einen elektrischen Energiespeicher 112, beispielsweise eine Batterie, einen Mikrocontroller 114 und eine Mehrzahl von Schaltern 116 auf. Das Steuersystem 100 weist ferner ein Anhängersteuermodul 120 auf. Das Anhängersteuermodul 120 weist einen Vorregler 122, einen Drucksensor 124 und ein erstes Ventil 126, ein zweites Ventil 127 sowie ein drittes Ventil 128 auf. Das Steuergerät 110 und das Anhängersteuermodul 120 sind elektrisch und signalübertragungsfähig miteinander verbunden. Dabei sind das Steuergerät 110 und das Anhängersteuermodul 120 über eine Versorgungsleitung 131, eine Drucksensor-Versorgungsrückmeldeleitung 132, eine Drucksensor-Signalleitung 133, eine Masseleitung 134, eine erste Aktivierungsleitung 135 zum Aktivieren des ersten Ventils 126, eine zweite Aktivierungsleitung 136 zum Aktivieren des zweiten Ventils 127 und eine dritte Aktivierungsleitung 137 zum Aktivieren des dritten Ventils 128 miteinander verbunden.

Fig. 2 zeigt eine schematische Darstellung eines Steuersystems 200 zum Steuern einer Bremsanlage eines Fahrzeuggespanns gemäß einem Ausführungsbeispiel. Das Steuersystem 200 ist ausgebildet, um die Bremsanlage des Fahrzeuggespanns zu steuern. Das Fahrzeuggespann, auf das unter Bezugnahme auf die nachfolgende Figur noch detaillierter eingegangen wird, weist ein Zugfahrzeug und einen Anhänger auf. Bei dem Zugfahrzeug handelt es sich um ein Nutzfahrzeug, beispielsweise einen Lastkraftwagen oder dergleichen. Das Steuersystem 200 ist Teil eines elektronischen Bremssystems (EBS) des Zugfahrzeugs bzw. des Fahrzeuggespanns. Das EBS weist auch Bremsanlagen des Zugfahrzeugs und auch des Anhängers auf, wenn dieser mit dem Zugfahrzeug gekoppelt ist. Das Steuersystem 200 ist in dem Zugfahrzeug angeordnet.

Das Steuersystem 200 weist eine Zentralsteuereinheit 210 und eine Vorrichtung 220 bzw. ein Anhängersteuermodul 220 auf. Die Vorrichtung 220 ist ausgebildet, um eine Bremsanlage des Anhängers von dem Zugfahrzeug aus zu steuern. Die Zentralsteuereinheit 210 und die Vorrichtung 220 sind elektrisch und signalübertragungsfähig miteinander verbunden.

Die Vorrichtung 220 weist eine Mehrzahl von Ventilen 222, 224 und 226 zum Einstellen eines Steuerdrucks eines Arbeitsmediums für die Bremsanlage des Anhängers auf. Bei der Mehrzahl von Ventilen 222, 224 und 226 handelt es sich hierbei um ein Einlassventil 222, ein Auslassventil 224 und ein Sicherungsventil 226. Ferner weist die Vorrichtung 220 zumindest einen Drucksensor 228 zum Erfassen des zumindest einen Steuerdrucks und zum Bereitstellen eines Sensorsignals 229 auf. Das Sensorsignal 229 repräsentiert den zumindest einen erfassten Steuerdruck. Die Vorrichtung 220 weist auch eine Versorgungsschnittstelle 230 zum Empfangen einer elektrischen Versorgungsspannung von der Zentralsteuereinheit 210 und eine Kommunikationsschnittstelle 235 zum Übertragen von Signalen zwischen der Vorrichtung 220 und der Zentralsteuereinheit 210 auf. Die Vorrichtung 220 ist elektrisch über die Versorgungschnittstelle 230 und signalübertragungsfähig über die Kommunikationsschnittstelle 235 mit der Zentralsteuereinheit 210 verbunden. Zudem weist die Vorrichtung 220 eine Steuereinrichtung 240 auf. Die Steuereinrichtung 240 ist ausgebildet, um das Sensorsignal 229 des zumindest einen Drucksensors 228 auszuwerten. Auch ist die Steuereinrichtung 240 ausgebildet, um die Ventile 222, 224 und 226 abhängig von dem ausgewerteten Sensorsignal 229 und abhängig von einem über die Kommunikationsschnittstelle 235 übertragenen Steuersignal 219 von der Zentralsteuereinheit 210 anzusteuern. Beispielsweise ist die Steuereinrichtung 240 ausgebildet, um Signale zum Öffnen und Schließen der Ventile 222, 224 und 226 bereitzustellen. Dabei ist die Steuereinrichtung 240 gemäß einem Ausführungsbeispiel ausgebildet, um die Ventile 222, 224 und 226 unabhängig voneinander ansteuern zu können.

Gemäß dem hier dargestellten Ausführungsbeispiel weist die Versorgungsschnittstelle 230 einen ersten elektrischen Anschluss 231 bzw. elektrischen Versorgungsanschluss 231 und einen zweiten elektrischen Anschluss 232 bzw. elektrischen Masseanschluss 232 auf. An dem Versorgungsanschluss 231 ist eine Versorgungsleitung 233 für ein elektrisches Versorgungspotenzial anschließbar. An dem Masseanschluss 232 ist eine Masseleitung 234 für ein elektrisches Massepotenzial anschließbar. Über die Versorgungsleitung 233 und die Masseleitung 234 ist die Vorrichtung 220 elektrisch mit Zentralsteuereinheit 210 verbunden. Ferner weist die Kommunikationsschnittstelle 235 gemäß dem hier dargestellten Ausführungsbeispiel einen ersten Anschluss 236 und einen zweiten Anschluss 237 auf. An dem ersten Anschluss 236 ist ein erstes Kommunikationskabel 238, insbesondere ein CAN-Bus-Kabel für einen Highside-Pfad der Vorrichtung 220, anschließbar. An dem zweiten Anschluss 237 ist ein zweites Kommunikationskabel 239, insbesondere ein CAN-Bus-Kabel für einen Lowside-Pfad der Vorrichtung 220, anschließbar. Über das erste Kommunikationskabel 238 und das zweite Kommunikationskabel 239 ist die Vorrichtung 220 signalübertragungsfähig mit der Zentralsteuereinheit 210 verbunden.

Gemäß dem hier dargestellten Ausführungsbeispiel weist die Vorrichtung 220 auch eine weitere Kommunikationsschnittstelle 242 zum Übertragen von Signalen der Vorrichtung 220 und dem Anhänger auf. Dabei ist die weitere Kommunikationsschnittstelle 242 insbesondere als eine sogenannte CAN-Trailer-Einheit ausgeführt. Die Kommunikationsschnittstelle 235 und die weitere Kommunikationsschnittstelle 242 können gemäß einem Ausführungsbeispiel auch kombiniert sein bzw. als eine einzige Kommunikationsschnittstelle ausgeführt sein. So kann ein CAN-BUS an die Zentralsteuereinheit 210, die Vorrichtung 220 und an ein Trailersteuergerät angeschlossen sein oder werden, wodurch ein weiterer CAN eingespart werden kann. Auch weist die Vorrichtung 220 gemäß dem hier dargestellten Ausführungsbeispiel eine Kommunikationseinheit 244 zum Kommunizieren mit dem Anhänger mittels Trägerfrequenztechnik auf. Die Vorrichtung 220 weist ferner für jedes der Ventile 222, 224 und 226 je einen Schalter 246 zum Aktivieren oder Deaktivieren der Ventile 222, 224 und 226 auf. Zudem weist die Vorrichtung 220 einen Spannungsregler 248 auf, der zwischen den Versorgungsanschluss 231 einerseits und den Drucksensor 228, die Steuereinrichtung 240 und die Schalter 246 andererseits geschaltet oder auf der Highside realisiert ist. Es kann optional auch eine Freilaufdiode parallel zu den Schaltern 246 und der Steuereinrichtung 240 geschaltet sein. Die Steuereinrichtung 240 ist als ein Mikrocontroller ausgeführt. Die Steuereinrichtung 240 ist insbesondere ausgebildet, um eine Druckregelschleife, die Schalter 246 und die Kommunikationsschnittstelle 235, die weitere Kommunikationsschnittstelle 242 und/oder die Kommunikationseinheit 244 zu steuern. Um die Ventile 222, 224 und 226 anzusteuern, ist die Steuereinrichtung 240 ausgebildet, die Schalter 246 jeweils zu öffnen oder zu schließen. Gemäß einem Ausführungsbeispiel ist die Steuereinrichtung 240 ausgebildet, um die Schalter 246 unabhängig voneinander ansteuern zu können. Gemäß dem hier dargestellten Ausführungsbeispiel ist die Vorrichtung 220 als ein elektronisches pneumatisches Modul bzw. elektro-pneumatisches Modul (EPM) ausgeführt. Dabei ist die gesamte Vorrichtung 220 innerhalb eines Gehäuses angeordnet, das einteilig oder mehrteilig ausgeführt ist. Ferner ist die Kommunikationsschnittstelle 235 gemäß dem hier dargestellten Ausführungsbeispiel sowohl mit einem Highside-Pfad als auch mit einem Lowside-Pfad der Vorrichtung 220 verbunden.

Die Zentralsteuereinheit 210 weist einen elektrischen Energiespeicher 212, beispielsweise eine Batterie, auf oder ist mit demselben verbunden und weist einen Mikrocontroller 214, eine Mehrzahl von Schaltern 216 und eine Kommunikationseinrichtung 218 auf. Die Schalter 216 sind ausgebildet, um das elektrische Versorgungspotenzial und das elektrische Massepotenzial auf die jeweiligen elektrischen Leitungen 233 und 234 aufzuschalten. Der Mikrocontroller 214 ist ausgebildet, um die Schalter 216 und die Kommunikationseinrichtung 218 zu steuern. Die Schalter 216 können alternativ auch nur an der Highside angeordnet sein. Gemäß einem Ausführungsbeispiel kann die Vorrichtung als ein Stand-alone-Gerät realisiert sein, wobei die Versorgungsschnittstelle 230, der erste elektrische Anschluss 231 bzw. elektrische Versorgungsanschluss, der zweite elektrische Anschluss 232 bzw. elektrische Masseanschluss, die Versorgungsleitung 233 und die Masseleitung 234 eingespart werden können. Die Kommunikationseinrichtung 218 ist über die Kommunikationskabel 238 und 239 mit der Kommunikationsschnittstelle 235 der Vorrichtung 220 verbunden. Der Mikrocontroller 214 ist ausgebildet, um das Steuersignal 219 über die Kommunikationseinrichtung 218, die Kommunikationskabel 238 und/oder 239 und die Kommunikationsschnittstelle 235 an die Steuereinrichtung 240 zu übertragen. Auch weist die Zentralsteuereinheit 210 einen Eingangsanschluss 211 zum Empfangen einer Bremsanforderung 205 von einem Fußbremsmodul des Zugfahrzeugs auf. Hierbei ist die Zentralsteuereinheit 210 bzw. der Mikrocontroller 214 ausgebildet, um das Steuersignal 219 zur Übertragung an die Vorrichtung 220 abhängig von der Bremsanforderung 205 zu erzeugen. Gemäß einem Ausführungsbeispiel ist die Zentralsteuereinheit 210 in einem Gehäuse angeordnet, das separat zu einem Gehäuse der Vorrichtung 220 ausgeführt und angeordnet ist.

Anders ausgedrückt ist in Fig. 2 eine als zentrales Steuergerät des elektronischen Bremssystems ausgeführte Zentralsteuereinheit 210 gezeigt, welche den Highside-Pfad und den Lowside-Pfad der Vorrichtung 220 kontrolliert. Die Kommunikation mit der Vorrichtung 220 findet über CAN bzw. ein CAN-Bussystem statt. Hierüber werden im Wesentlichen die Bremsanforderungen 205 und das Steuersignal 219 übermittelt. Die Vorrichtung 220 empfängt das auf der Bremsanforderung 205 beruhende Steuersignal 219 über die Kommunikationsschnittstelle 235, hier ein CAN-Bus, und setzt letztlich die Bremsanforderung 205 in einem Regelalgorithmus der Steuereinrichtung 240 um. Sensorsignal 219 von dem Drucksensor 228 oder mehreren Drucksensoren 228 werden innerhalb der Vorrichtung 220 eingelesen. Die Sensorsignale 219 können ohne Masseversätze oder Verzögerungen verwendet werden. Es kann beispielsweise gegebenenfalls lediglich ein Filter zum Einsatz kommen. Intensive Kompensationsrechnungen werden somit vermieden, sodass die Regelgüte steigt. Es können auf einfache Weise weitere Drucksensoren 228 in die Vorrichtung 220 integriert werden (eTPCM). Ein bedeutsamer Punkt besteht auch in einer Integration weiterer Funktionen, welche für die Anhängersteuerung relevant sind. Hier sind in Gestalt der weiteren Kommunikationsschnittstelle 242 und der Kommunikationseinheit 244 auch Module wie PLC-BUS (PLC = Powerline Communication) und CAN-Trailer denkbar. So ist beispielsweise eine Variante der Vorrichtung 220 für Nordamerika denkbar, welche eine Kommunikationseinheit 244 zum Anhänger vorschreibt. Eine weitere Variante könnte sein, die weitere Kommunikationsschnittstelle 242 in Gestalt von CAN-Trailer (einen 24-Volt-CAN-Bus) in die Vorrichtung 220 zu integrieren. Ein Ausführungsbeispiel sieht auch vor, dass ein EPM (Elektronisches Pneumatisches Modul) verwendet wird, bei dem die zusätzlichen Anhängerfunktionen integriert sind bzw. werden.

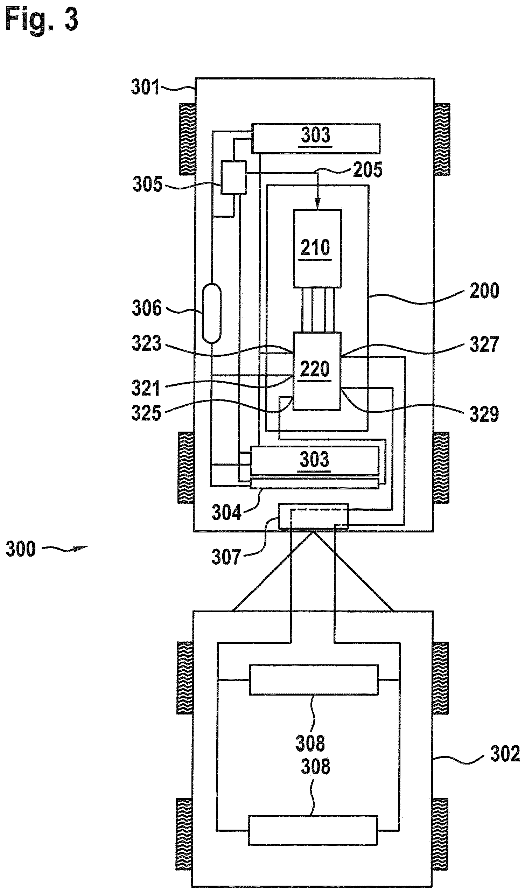

Fig. 3 zeigt eine schematische Darstellung eines Fahrzeuggespanns 300 mit einem Steuersystem 200 gemäß einem Ausführungsbeispiel. Das Steuersystem 200 entspricht oder ähnelt dem Steuersystem aus Fig. 2. Somit ist das Steuersystem 200 ausgebildet, um eine Bremsanlage des Fahrzeuggespanns 300 zu steuern. Das Fahrzeuggespann 300 weist ein Zugfahrzeug 301 und einen Anhänger 302 auf. In der Darstellung von Fig. 3 sind das Zugfahrzeug 301 und der Anhänger 302 in einem miteinander gekoppelten Zustand gezeigt. Bei dem Zugfahrzeug 301 handelt es sich beispielsweise um einen Lastkraftwagen oder ein anderes Nutzfahrzeug. Das Zugfahrzeug 301 weist das Steuersystem 200 auf. Von dem Steuersystem 200 sind in der Darstellung von Fig. 3 hierbei die Zentralsteuereinheit 210 und die Vorrichtung 220 bzw. das Anhängersteuermodul 220 gezeigt. Ferner weist das Zugfahrzeug 301 beispielhaft auch eine Bremsanlage mit Betriebsbremseinrichtungen 303 und einer Feststellbremseinrichtung 304, ein Fußbremsmodul 305, einen Vorrat 306 an Arbeitsmedium mit einem Vorratsdruck und eine Anhängerschnittstelle 307 auf. Das Fußbremsmodul 305 ist ausgebildet, um ansprechend auf eine Betätigung durch einen Nutzer die Bremsanforderung 205 zu generieren. Das Fußbremsmodul 305 ist mit der Zentralsteuereinheit 210 des Steuersystems 200 verbunden. Der Vorrat 306 und das Fußbremsmodul 305 sind mit der Bremsanlage bzw. mit den Betriebsbremseinrichtungen 303 und der Feststellbremseinrichtung 304 verbunden. Die Bremsanlage bzw. die Betriebsbremseinrichtungen 303 und die Feststellbremseinrichtung 304 sind auch mit dem Steuersystem 200 verbunden, insbesondere mit der Vorrichtung 220 und auch signalübertragungsfähig mit der Zentralsteuereinheit 210, auch wenn letztere Verbindung nicht explizit gezeigt ist. Die Anhängerschnittstelle 307 ist mit der Vorrichtung 220 des Steuersystems 200 verbunden. Die Anhängerschnittstelle 307 ist ausgebildet, um das Arbeitsmedium mit dem Steuerdruck an den Anhänger 302, genauer gesagt an die Bremsanlage 308 des Anhängers 302 zu übertragen. Ferner ist die Anhängerschnittstelle 307 ausgebildet, um das Arbeitsmedium mit dem Vorratsdruck an den Anhänger 302, genauer gesagt an die Bremsanlage 308 des Anhängers 302 zu übertragen.

Die Vorrichtung 220 weist gemäß dem hier dargestellten Ausführungsbeispiel einen pneumatischen Vorratseinlass 321 für Arbeitsmedium mit dem Vorratsdruck, einen pneumatischen Betriebsbremskreiseinlass 323 zur Verbindung mit einem Betriebsbremskreis des Zugfahrzeugs 301, einen pneumatischen Vorratsauslass 327 für Arbeitsmedium mit dem Vorratsdruck zu dem Anhänger 302 bzw. zu der Anhängerschnittstelle 307 und einen pneumatischen Bremsauslass 329 für Arbeitsmedium mit dem Steuerdruck zu dem Anhänger 302 bzw. zu der Anhängerschnittstelle 307 auf.

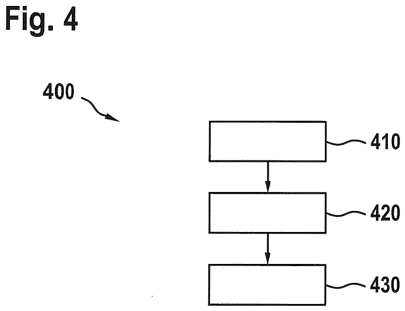

**Fig. 4** zeigt ein Ablaufdiagramm eines Verfahrens 400 zum Steuern gemäß einem Ausführungsbeispiel. Das Verfahren 400 ist ausführbar, um eine Bremsanlage eines Anhängers eines Fahrzeuggespanns von einem Zugfahrzeug des Fahrzeuggespanns aus zu steuern. Dabei ist das Verfahren 400 unter Verwendung der Vorrichtung aus einer der Figuren 2 bis 3 oder einer ähnlichen Vorrichtung ausführbar. Insbesondere ist das Verfahren 400 auch in Verbindung mit dem Steuersystem aus einer der Figuren 2 bis 3 oder einem ähnlichen Steuersystem ausführbar.

Das Verfahren 400 weist einen Schritt 410 des Einlesens, einen Schritt 420 des Auswertens und einen Schritt 430 des Ansteuerns auf. In dem Schritt 410 des Einlesens wird mittels der Steuereinrichtung über die Kommunikationsschnittstelle das Steuersignal von der Zentralsteuereinheit eingelesen. In dem Schritt 420 des Auswertens wird nachfolgend mittels der Steuereinrichtung das Sensorsignal des zumindest einen Drucksensors ausgewertet. Wiederum nachfolgend werden in dem Schritt 430 des Ansteuerns abhängig von dem im Schritt 420 des Auswertens ausgewerteten Sensorsignal und abhängig von dem im Schritt 410 des Einlesens eingelesenen Steuersignal die Ventile angesteuert, um den Steuerdruck des Arbeitsmediums für die Bremsanlage des Anhängers einzustellen.

### BEZUGSZEICHENLISTE

- 100: Steuersystem
- 110: Steuergerät
- 112: Energiespeicher
- 114: Mikrocontroller
- 116: Schalter
- 120: Anhängersteuermodul
- 122: Vorregler
- 124: Drucksensor
- 126: erstes Ventil
- 127: zweites Ventil
- 128: drittes Ventil
- 131: Versorgungsleitung
- 132: Drucksensor-Versorgungsrückmeldeleitung
- 133: Drucksensor-Signalleitung
- 134: Masseleitung
- 135: erste Aktivierungsleitung
- 136: zweite Aktivierungsleitung
- 137: dritte Aktivierungsleitung

- 200: Steuersystem
- 205: Bremsanforderung
- 211: Eingangsanschluss
- 210: Zentralsteuereinheit
- 212: Energiespeicher
- 214: Mikrocontroller
- 216: Schalter
- 218: Kommunikationseinrichtung
- 219: Steuersignal
- 220: Vorrichtung bzw. Anhängersteuermodul
- 222: Einlassventil
- 224: Auslassventil
- 226: Sicherungsventil
- 228: Drucksensor
- 229: Sensorsignal
- 230: Versorgungsschnittstelle
- 231: erster elektrischer Anschluss bzw. elektrischer Versorgungsanschluss
- 232: zweiter elektrischer Anschluss bzw. elektrischer Masseanschluss
- 233: Versorgungsleitung
- 234: Masseleitung
- 235: Kommunikationsschnittstelle
- 236: erster Anschluss
- 237: zweiter Anschluss
- 238: erstes Kommunikationskabel
- 239: zweites Kommunikationskabel
- 240: Steuereinrichtung
- 242: weitere Kommunikationsschnittstelle
- 244: Kommunikationseinheit
- 246: Schalter
- 248: Spannungsregler

- 300: Fahrzeuggespann
- 301: Zugfahrzeug
- 302: Anhänger
- 303: Betriebsbremseinrichtungen
- 304: Feststellbremseinrichtung
- 305: Fußbremsmodul
- 306: Vorrat
- 307: Anhängerschnittstelle
- 308: Bremsanlage des Anhängers
- 321: pneumatischer Vorratseinlass
- 323: pneumatischer Betriebsbremskreiseinlass
- 327: pneumatischer Vorratsauslass
- 329: pneumatischer Bremsauslass
- 400: Verfahren zum Steuern
- 410: Schritt des Einlesens
- 420: Schritt des Auswertens
- 430: Schritt des Ansteuerns

## Patentansprüche

1. Vorrichtung (220) zum Steuern einer Bremsanlage (308) eines Anhängers (302) eines Fahrzeuggespanns (300) von einem Zugfahrzeug (301) des Fahrzeuggespanns (300) aus, wobei die Vorrichtung (220) folgende Merkmale aufweist:
eine Mehrzahl von Ventilen (222, 224, 226) zum Einstellen eines Steuerdrucks eines Arbeitsmediums für die Bremsanlage (308) des Anhängers (302), wobei die Mehrzahl von Ventilen (222, 224, 226) ein Einlassventil (222), ein Auslassventil (224) und ein Sicherungsventil (226) umfassen;
zumindest einen Drucksensor (228) zum Erfassen des zumindest einen Steuerdrucks und zum Bereitstellen eines Sensorsignals (229), das den zumindest einen erfassten Steuerdruck repräsentiert;
eine Kommunikationsschnittstelle (235) zum Übertragen von Signalen (219) zwischen der Vorrichtung (220) und einer Zentralsteuereinheit (210) eines Bremssystems des Zugfahrzeugs (301), wobei die Kommunikationsschnittstelle (235) mit einem Highside-Pfad und mit einem Lowside-Pfad der Vorrichtung (220) verbunden ist;
eine Kommunikationseinheit (244) zum Kommunizieren mit dem Anhänger (302) mittels Trägerfrequenztechnik; und
eine Steuereinrichtung (240) zum Auswerten des Sensorsignals (229) des Drucksensors (228) und zum Ansteuern der Ventile (222, 224, 226) abhängig von dem ausgewerteten Sensorsignal (229) und abhängig von einem über die Kommunikationsschnittstelle (235) übertragenen Steuersignal (219) von der Zentralsteuereinheit (210), wobei eine Druckregelschleife vollständig innerhalb der Vorrichtung (220) realisiert ist.

2. Vorrichtung (220) gemäß Anspruch 1, mit einer Versorgungsschnittstelle (230) zum Empfangen einer elektrischen Versorgungsspannung von der Zentralsteuereinheit (210), insbesondere wobei die Versorgungsschnittstelle (230) zwei elektrische Anschlüsse (231, 232) für jeweils eine elektrische Leitung (233, 234) aufweist, und/oder wobei die Kommunikationsschnittstelle (235) zwei Anschlüsse (236, 237) für jeweils ein Kommunikationskabel (238, 239) aufweist.

3. Vorrichtung (220) gemäß einem der vorangegangenen Ansprüche, mit einer weiteren Kommunikationsschnittstelle (242) zum Übertragen von Signalen zwischen der Vorrichtung (220) und dem Anhänger (302).

4. Vorrichtung (220) gemäß einem der vorangegangenen Ansprüche, wobei die Vorrichtung (220) als ein elektronisches pneumatisches Modul ausgeführt ist.

5. Vorrichtung (220) gemäß Anspruch 4, mit einem pneumatischen Vorratseinlass (321) für Arbeitsmedium mit einem Vorratsdruck, einem pneumatischen Betriebsbremskreiseinlass (323) zur Verbindung mit einem Betriebsbremskreis des Zugfahrzeugs (301), einem pneumatischen Vorratsauslass (327) für Arbeitsmedium mit dem Vorratsdruck zu dem Anhänger (302) und/oder einem pneumatischen Bremsauslass (329) für Arbeitsmedium mit dem Steuerdruck zu dem Anhänger (302).

6. Steuersystem (200) zum Steuern einer Bremsanlage (303, 304, 308) eines Fahrzeuggespanns (300), wobei das Fahrzeuggespann (300) ein Zugfahrzeug (301) und einen Anhänger (302) aufweist, wobei das System (200) folgende Merkmale aufweist:
eine Vorrichtung (220) gemäß einem der vorangegangenen Ansprüche; und
die Zentralsteuereinheit (210), wobei die Vorrichtung (220) signalübertragungsfähig über die Kommunikationsschnittstelle (235) mit der Zentralsteuereinheit (210) verbunden ist.

7. Steuersystem (200) gemäß Anspruch 6, bei dem die Zentralsteuereinheit (210) einen Eingangsanschluss (211) zum Empfangen einer Bremsanforderung (205) von einem Fußbremsmodul (305) des Zugfahrzeugs (301) aufweist, und/oder wobei die Zentralsteuereinheit (210) ausgebildet ist, um das Steuersignal (219) zur Übertragung an die Vorrichtung (220) abhängig von der Bremsanforderung (205) zu erzeugen.

8. Steuersystem (200) gemäß Anspruch 6 oder 7, bei dem die Zentralsteuereinheit (210) und die Vorrichtung (220) ausgebildet sind, um Funktionalitäten der Kommunikationsschnittstelle (235) und einer weiteren Kommunikationsschnittstelle (242) zwischen der Zentralsteuereinheit (210), der Vorrichtung (220) und dem Anhänger (302) geteilt auszuführen.

9. Zugfahrzeug (301) für einen Anhänger (302), wobei das Zugfahrzeug (301) und der Anhänger (302) ein Fahrzeuggespann (300) bilden, wobei das Zugfahrzeug (301) folgende Merkmale aufweist:
ein Steuersystem (200) gemäß einem der Ansprüche 6 bis 8;
ein Fußbremsmodul (305) zum Generieren einer Bremsanforderung (205) ansprechend auf eine Betätigung durch einen Nutzer, wobei das Fußbremsmodul (305) mit der Zentralsteuereinheit (210) des Steuersystems (200) verbunden ist;
eine Bremsanlage (303, 304) des Zugfahrzeugs (301), wobei die Bremsanlage (303, 304) mit dem Fußbremsmodul (305) und dem Steuersystem (200) verbunden ist; und
eine Anhängerschnittstelle (307) zum Übertragen des Arbeitsmediums mit dem Steuerdruck an den Anhänger (302), wobei die Anhängerschnittstelle (307) mit der Vorrichtung (220) des Steuersystems (200) verbunden ist.

10. Verfahren (400) zum Steuern einer Bremsanlage (308) eines Anhängers (302) eines Fahrzeuggespanns (300) von einem Zugfahrzeug (301) des Fahrzeuggespanns (300) aus, wobei das Verfahren (400) unter Verwendung der Vorrichtung (220) gemäß einem der Ansprüche 1 bis 5 ausführbar ist, wobei das Verfahren (400) folgende Schritte aufweist:
Einlesen (410) des Steuersignals (219) von der Zentralsteuereinheit (210) über die Kommunikationsschnittstelle (235);
Auswerten (420) des Sensorsignals (229) des zumindest einen Drucksensors (228); und
Ansteuern (430) der Ventile (222, 224, 226) abhängig von dem ausgewerteten Sensorsignal (229) und abhängig von dem Steuersignal (219), um den Steuerdruck des Arbeitsmediums für die Bremsanlage (308) des Anhängers (302) einzustellen.

11. Computerprogramm, das dazu eingerichtet ist, das Verfahren (400) gemäß Anspruch 10 auszuführen und/oder anzusteuern.

12. Maschinenlesbares Speichermedium, auf dem das Computerprogramm nach Anspruch 11 gespeichert ist.

13. Verwendung einer Vorrichtung (220) gemäß einem der Ansprüche 1 bis 5 als ein Gateway zwischen einer Kommunikation mit einer Zentralsteuereinheit (210) eines Steuersystems (200) zum Steuern einer Bremsanlage (303, 304, 308) eines Fahrzeuggespanns (300) und einer Kommunikation mit einem Anhänger (302) des Fahrzeuggespanns (300).

## Claims

1. An apparatus (220) for controlling a brake system (308) of a trailer (302) of a vehicle combination (300) from a traction vehicle (301) of the vehicle combination (300), the apparatus (220) having the following features:
a plurality of valves (222, 224, 226) for setting a control pressure of a working medium for the brake system (308) of the trailer (302), this plurality of valves (222, 224, 226) comprising an inlet valve (222), an outlet valve (224) and a safety valve (226);
at least one pressure sensor (228) for detecting the at least one control pressure and for providing a sensor signal that represents the at least one control pressure detected;
a communication interface (235) for transmitting signals (219) between the apparatus (220) and a central control unit (210) of a brake system of the traction vehicle (301), this communication interface (235) being connected to a high-side path and to a low-side path of the apparatus (220);
a communication unit (244) for communicating with the trailer (302) by means of carrier frequence technology; and
a control device (240) for evaluating the sensor signal (229) of the pressure sensor (228) and for piloting the valves (222, 224, 226) as a function of the evaluated sensor signal (229) and as a function of a control signal (219) transmitted via the communication interface (235) from the central control unit (210), a pressure regulation loop thus being formed entirely within the apparatus (220).

2. An apparatus (220) according to claim 1, having a supply interface (230) for receiving an electrical supply voltage from the central control unit (210), in particular the supply interface (230) having two electrical connections (231, 232) for each electrical line (233, 234), and/or the communication interface (235) having two connections (236, 237) for each communication cable (238, 239).

3. An apparatus (220) according to any one of the preceding claims, having a further communication interface (242) for transmitting signals between the apparatus (220) and the trailer (302).

4. An apparatus (220) according to any one of the preceding claims, the apparatus (220) taking the form of an electronic pneumatic module.

5. An apparatus (220) according to claim 4, having a pneumatic supply inlet (321) for a working medium with a supply pressure, a pneumatic service brake circuit inlet (323) for connecting to a service brake circuit of the traction vehicle (301), a pneumatic supply outlet (327) for a working medium with the supply pressure to the trailer (302) and/or a pneumatic brake outlet (329) for a working medium with the control pressure to the trailer (302).

6. A control system (200) for controlling a brake system (303, 304, 308) of a vehicle combination (300), this vehicle combination (300) comprising a traction vehicle (301) and a trailer (302) and the system (200) having the following features:
an apparatus (220) according to any one of the preceding claims; and
a central control unit (210), the apparatus (220) being connected to the central control unit (210) via the communication interface (235) in a manner enabling signal transmission.

7. A control system (200) according to claim 6, in which the central control unit (210) has an inlet port (211) for receiving a braking request (205) from a foot brake module (305) of the traction vehicle (301), and/or the central control unit (210) being designed to generate the control signal (219) for transmission to the apparatus (220) as a function of the braking request (205).

8. A control system (200) according to claim 6 or 7, in which the central control unit (210) and the apparatus (220) are designed to perform functionalities of the communication interface (235) and of a further communication interface (242) between the central control unit (210), the apparatus (220) and the trailer (302) separately.

9. A traction vehicle (301) for a trailer (302), the traction vehicle (301) and the trailer (302) forming a vehicle combination (300), the traction vehicle (301) having the following features:
a control system (200) according to any one of claims 6 to 8;
a foot-brake module (305) for generating a braking request (205) in response to an actuation by a user, the foot-brake module (305) being connected to the central control unit (210) of the control system (200);
a brake system (303, 304) of the traction vehicle (301), the brake system (303, 304) being connected to the foot-brake module (305) and to the control system (200); and
a trailer interface (307) for transmitting the working medium with the control pressure to the trailer (302), the trailer interface (307) being connected to the apparatus (220) of the control system (200).

10. A method (400) for controlling a brake system (308) of a trailer (302) of a vehicle combination (300) from a traction vehicle (301) of the vehicle combination (300), it being possible to implement the method (400) using the apparatus (220) according to any one of claims 1 to 5, this method (400) comprising the following steps:
the reading-in (410) of the control signal (219) from the central control unit (210) via the communication interface (235);
the evaluation (420) of the sensor signal (229) of the at least one pressure sensor (228); and
the piloting (430) of the valves (222, 224, 226) as a function of the evaluated sensor signal (229) and as a function of the control signal (219) in order to set the control pressure of the working medium for the brake system (308) of the trailer (302).

11. A computer program that is configured to perform and/or trigger the method (400) according to claim 10.

12. A machine-readable storage medium on which the computer program according to claim 11 is stored.

13. The use of an apparatus (220) according to any one of claims 1 to 5 as a gateway between communication with a central control unit (210) of a control system (200) for controlling a brake system (303, 304, 308) of a vehicle combination (300) and communication with a trailer (302) of the vehicle combination (300).

## Revendications

1. Montage (220) de commande d'un système (308) de freinage d'une remorque (302) d'un train (300) de véhicules par un véhicule (301) tracteur du train (300) de véhicules, dans lequel le montage (220) a les caractéristiques suivantes :
une pluralité de soupapes (222, 224, 226) pour régler une pression de commande d'un fluide de travail pour le système (308) de freinage de la remorque (302), dans lequel la pluralité de soupapes (222, 224, 226) comprend une soupape (222) d'entrée, une soupape (224) de sortie et une soupape (226) de sécurité ;
au moins un capteur (228) de pression pour relever la au moins une pression de commande et pour disposer d'un signal (229) de capteur, qui représente la au moins une pression de commande relevée ;
une interface (235) de communication pour la transmission de signaux (219) entre le montage (220) et une unité (210) centralisée de commande d'un système de freinage du véhicule (301) tracteur, dans lequel l'interface (235) de communication est reliée à un chemin highside et à un chemin lowside du montage (220) ;
une unité (244) de communication pour communiquer avec la remorque (302) au moyen de la technique de fréquence porteuse ; et
un dispositif (240) de commande pour l'exploitation du signal (229) du capteur (228) de pression et pour la commande des soupapes (222, 224, 226) en fonction de l'évaluation du signal (229) de capteur et en fonction d'un signal (219) de commande, transmis par l'intermédiaire de l'interface (235) de communication, de l'unité (210) centralisée de commande, dans lequel une boucle de régulation de la pression est réalisée entièrement à l'intérieur du montage (220).

2. Montage (220) suivant la revendication 1, comprenant une interface (230) d'alimentation pour la réception d'une tension électrique d'alimentation de l'unité (210) centralisée de commande, dans lequel, en particulier, l'interface (230) d'alimentation a deux bornes (231, 232) électriques pour respectivement une ligne (233, 234) électrique et/ou dans lequel l'interface (235) de communication a deux bornes (236, 237) pour respectivement un câble (238, 239) de communication.

3. Montage (220) suivant l'une des revendications précédentes, comprenant une autre interface (242) de communication pour la transmission de signaux entre le montage (220) et la remorque (302).

4. Montage (220) suivant l'une des revendications précédentes, dans lequel le montage (220) est réalisé sous la forme d'un module électronique pneumatique.

5. Montage (220) suivant la revendication 4, comprenant une entrée (321) de réservoir pneumatique pour du fluide de travail ayant une pression de réservoir, une entrée (323) pneumatique de circuit de frein de service pour la liaison avec un circuit de frein de service du véhicule (301) tracteur, une sortie (327) pneumatique de réservoir pour du fluide de travail ayant la pression de réservoir menant à la remorque (302) et/ou une sortie (329) pneumatique de frein pour du fluide de travail ayant la pression de commande menant à la remorque (302).

6. Système (200) de commande pour la commande d'un système (303, 304, 308) de freinage d'un train (300) de véhicules, dans lequel le train (300) de véhicules a un véhicule (301) tracteur et une remorque (302), dans lequel le système (200) a les caractéristiques suivantes :
un montage (220) suivant l'une des revendications précédentes ; et
l'unité (210) centralisée de commande, dans lequel le montage (220) est relié avec possibilité de transmettre des signaux à l'unité (210) centralisée de commande par l'intermédiaire de l'interface (235) de communication.

7. Système (200) de commande suivant la revendication 6, dans lequel l'unité (210) centralisée de commande a un raccord (211) d'entrée pour la réception d'une demande (205) de freinage par un module (305) de frein au pied du véhicule (301) tracteur, et/ou dans lequel l'unité (210) centralisée de commande est constituée pour produire le signal (219) de commande pour la transmission au montage (220) en fonction de la demande (205) de freinage.

8. Système (200) de commande suivant la revendication 6 ou 7, dans lequel l'unité (210) centralisée de commande et le montage (220) sont constitués pour exécuter, de manière divisée, des fonctionnalités de l'interface (235) de communication et d'une autre interface (242) de communication entre l'unité (210) centralisée de commande, le montage (220) et la remorque (302).

9. Véhicule (301) tracteur pour une remorque (302), dans lequel le véhicule (301) tracteur et la remorque (302) forment un train (300) de véhicules, dans lequel le véhicule (301) tracteur a les caractéristiques suivantes :
un système (200) de commande suivant l'une des revendications 6 à 8 ;
un module (305) de frein au pied pour créer une demande (205) de freinage en réaction à un actionnement par un utilisateur, dans lequel le module (305) de frein au pied est relié à l'unité (210) centralisée de commande du système (200) de commande ;
un système (303, 304) de frein du véhicule (301) tracteur, dans lequel le système (303, 304) de frein est relié au module (305) de frein et au système (200) de commande ; et
une interface (307) de remorque pour la transmission à la remorque (302) du fluide de travail ayant la pression de commande, dans lequel l'interface (307) de remorque est reliée au montage (220) du système (200) de commande.

10. Procédé (400) de commande d'un système (308) de frein d'une remorque (302) d'un train (300) de véhicules par un véhicule (301) tracteur du train (300) de véhicules, dans lequel le procédé (400) peut être réalisé en utilisant le montage (220) suivant l'une des revendications 1 à 5, dans lequel le procédé (400) a les stades suivants :
lecture (410) du signal (219) de commande par l'unité (210) centralisée de commande par l'intermédiaire de l'interface (235) de communication ;
évaluation (420) du signal (229) du au moins un capteur (228) de pression ; et
commande (430) des soupapes (222, 224, 226) en fonction de l'évaluation du signal (229) de capteur et en fonction du signal (219) de commande pour régler la pression de commande du fluide de travail pour le système (308) de frein de la remorque (302).

11. Programme d'ordinateur, qui est conçu pour exécuter et/ou commander le procédé (400) suivant la revendication 10.

12. Support de mémoire, déchiffrable par une machine, sur lequel le programme d'ordinateur suivant la revendication 11 est mis en mémoire.

13. Utilisation d'un montage (220) suivant l'une des revendications 1 à 5 comme passerelle entre une communication ayant une unité (210) centralisée de commande d'un système (200) de commande pour la commande d'un système (303, 304, 308) de frein d'un train (300) de véhicules et d'une communication avec une remorque (302) du train (300) de véhicules.
